# EUROPÄISCHE PATENTSCHRIFT

(11) **EP 2 137 512 B1**
(45) Veröffentlichungstag und Bekanntmachung des Hinweises auf die Patenterteilung: **12.01.2011**
(21) Anmeldenummer: 08749610.5
(22) Anmeldetag: 18.04.2008
(51) Int. Cl.: G01N 21/03, G01N 21/27, G01N 21/59

(54) **ANALYSEVORRICHTUNG BZW. VERFAHREN ZUR UNTERSUCHUNG DER KATALYTISCHEN AKTIVITÄT VON OBERFLÄCHEN**
ANALYSIS DEVICE AND METHOD FOR TESTING THE CATALYTIC ACTIVITY OF SURFACES
DISPOSITIF D'ANALYSE ET PROCÉDÉ POUR ÉTUDIER L'ACTIVITÉ CATALYTIQUE DE SURFACES

(30) Priorität: 25.04.2007 DE 102007020544
(43) Veröffentlichungstag der Anmeldung: 30.12.2009
(73) Patentinhaber: Siemens Aktiengesellschaft, 80333 München (DE)
(72) Erfinder: JENSEN, Jens Dahl, 14050 Berlin (DE); KRÜGER, Ursus, 14089 Berlin (DE); LÜTHEN, Volkmar, 14163 Berlin (DE); ULLRICH, Raymond, 14621 Schönwalde (DE)
(74) Vertreter: Wolff, Harry
(86) Internationale Anmeldenummer: PCT/EP2008/054760
(87) Internationale Veröffentlichungsnummer: WO 2008/132078

(56) Entgegenhaltungen:
- WO-A-2006/118347
- US-A- 3 901 600
- US-A- 4 750 133
- US-B1- 6 998 991
- RUPPRECHTER, G ET AL.: "Spektroskopie an Modellkatalysatoren unter Atmosphärendruck" TÄTIGKEITSBERICHT 2005 DER MAX-PLANCK-GESELLSCHAFT, 2005, Seiten 193-201, XP002491370 Berlin

## Beschreibung

Die Erfindung betrifft eine Analysevorrichtung zur Untersuchung der katalytischen Aktivität von Oberflächen, aufweisend eine Reaktorzelle (oder Reaktionszelle) mit einer Aufnahme für eine mit der katalytisch aktiven Oberfläche ausgestatteten Probe und eine Messanordnung zur optischen Untersuchung der in der Reaktorzelle ablaufenden Reaktionen. Eine Analysevorrichtung der eingangs angegebenen Art ist beispielsweise in Rupprechter, G et al., "Spektroskopie an Modellkatalysatoren unter Atmosphärendruck", Tätigkeitsbericht 2005 der Max-Planck-Gesellschaft auf den Seiten 193 bis 201 beschrieben. Zur Untersuchung der katalytisch aktiven Oberfläche ist eine Reaktionszelle vorgesehen, in die die betreffende Probe transferiert werden kann. Es ist nun möglich, diese Probe in situ dadurch zu untersuchen, dass mit Hilfe der Summenfrequenz-Laserspektroskopie (SFG) oder der Polarisations-Modulations-Infrarot-Reflektions-Absorptions-Spektroskopie (PM-IRAS) Spektren aufgenommen und in geeigneter Weise interpretiert werden. Hierdurch werden Aussagen über die Wirkungsweise und die Effektivität der Modellkatalysatoren möglich. Zur Anwendung der genannten spektroskopischen Methoden ist ein experienteller Laboraufbau notwendig.

Hieraus ergibt sich die Aufgabe, eine Analysevorrichtung zur Untersuchung der katalytischen Aktivität von Oberflächen anzugeben, mit der ein portabler Einsatz möglich ist, so dass auch in Gebrauch befindliche Katalysatorschichten vor Ort einer Untersuchung unterzogen werden können.

Diese Aufgabe wird mit eingangs angegebener Analysevorrichtung erfindungsgemäß dadurch gelöst, dass die Reaktionszelle aus einem geschlossenen Kanal besteht, der einen Teil eines fluidischen Kreislaufes bildet, und die Messanordnung eine Lichtquelle zur Erzeugung eines Messstrahls und einen Lichtsensor für diesen Messstrahl aufweist. Dabei soll die Messanordnung ein Einspeisen des Messstrahls in den Kanal und ein Austreten des Messstrahls aus dem Kanal derart erlauben, dass der Messstrahl an der Wand des Kanals mindestens einmal reflektiert wird. Die Anordnung der Reaktionszelle in einem geschlossenen Kanal unter Ausbildung eines fluidischen Kreislaufs erlaubt vorteilhaft zunächst die Ausbildung eines vergleichsweise platzsparend ausgeführten Reaktionsraums mit geringem Reaktionsvolumen. Eine katalytisch gestützte Reaktion in dem Probemedium, welches durch diese Reaktionszelle geleitet wird, kann durch die Bildung des fluidischen Kreislaufs vorteilhaft mit vorhersagbaren Reaktionsbedingungen betrieben werden, wenn das Probemedium in dem Kanal umgewälzt wird. Hierdurch werden nämlich vorteilhaft lokale Sättigungseffekte im Probemedium vermieden, welche zu verfälschten Messungen führen könnten.

Weiterhin erlaubt die erfindungsgemäße Messanordnung mit einer Lichtquelle und einem Lichtsensor vorteilhaft eine vergleichsweise einfache Messung, die auf dem Effekt beruht, dass bei fortschreitender katalytisch unterstützter Reaktion in dem Kanal das Absorptionsverhalten des Probenmediums verändert wird. Die Durchleitung des Messstrahls durch den Kanal erlaubt durch Auswertung eines durch den Lichtsensor generierten Messwertes der aufgenommenen Lichtintensität einen Rückschluss auf das Absorptionsverhalten. Aufgrund der erfolgten Miniaturisierung des Kanals im Verhältnis zu üblichen Reaktionskammern ist es dabei notwendig, den Messstrahl mindestens einmal, bevorzugt sogar mehrere Male, in dem Kanal umzuleiten, was durch eine Reflexion an den Kanalwänden erfolgt. Hierdurch wird die durch den Messstrahl in dem Probemedium zurückgelegte Weglänge vorteilhaft erhöht, so dass sich eine Änderung des Absorptionsverhaltens des Probemediums vorteilhaft stärker auf die Lichtintensität im ausgekoppelten Messstrahl auswirkt. Damit ist eine empfindlichere Messung mit dem Lichtsensor möglich.

Um eine Durchleitung des Messstrahls durch den Kanal in der geforderten Weise zu gewährleisten, sind die bei der Messung vorherrschenden optischen Bedingungen gebührend zu berücksichtigen. Das Reflexionsverhalten des Messstrahls in dem Kanal hängt nämlich in starkem Maße von der optischen Dichte des Probemediums ab. Dieses kann flüssig oder gasförmig vorliegen, wobei in jedem Falle an der Kanalwand ein für eine Totalreflexion des Messstrahls geeigneter optischer Brechungsindex eingehalten werden muss. Weiterhin muss die Einkopplung bzw. Auskopplung des Messstrahls in bzw. aus dem Kanal gewährleistet werden. Zumindest an der Einspeisungsstelle und an der Austrittsstelle des Messstrahls in und aus dem Kanal muss die Kanalwand aus einem optisch transparenten Medium ausgebildet sein, welches die Durchleitung des Messstrahles gestattet. Um die dabei auftretenden Brechungseffekte zu kompensieren, können an der Einspeisungs- bzw. Austrittsstelle für den Messstrahl Prismen angeordnet werden, die eine optische Verbindung zu dem Lichtsensor bzw. der Lichtquelle herstellen.

Der beschriebene Aufbau der erfindungsgemäßen Analysevorrichtung führt vorteilhaft zur Möglichkeit einer sehr platzsparenden Konstruktion. Hierdurch wird der portable Einsatz der Analysevorrichtung möglich. Das verwendete Messverfahren lässt insbesondere durch Messung der Absorption evtl. unter Berücksichtigung des Zeitverhaltens Aussagen über die katalytische Aktivität des untersuchten Katalysators zu. Es kann daher ein durch fortschreitende Benutzung erzeugter Verlust der Oberfläche an katalytischer Wirkung festgestellt werden und bei Unterschreiten einer bestimmten Wirksamkeit ein Austausch des Katalysators vorgenommen werden. Der im Einsatz befindliche Katalysator ist in diesem Fall die mit der Analysevorrichtung zu untersuchende Probe.

Gemäß einer Ausgestaltung der Erfindung ist vorgesehen, dass die Aufnahme derart in der Wand des Kanals untergebracht ist, dass eine in die Aufnahme eingesetzte Probe einen Teil der Wand des Kanals bildet. Hierdurch ist vorteilhaft eine besonders kompakte Bauweise möglich, weil die Probe nicht vollständig in die Reaktionszelle aufgenommen werden muss, sondern eine Grenzfläche derselben bildet.

Gemäß einer anderen Ausgestaltung der Erfindung ist vorgesehen, dass der Kanal durch zwei Gehäuseschalen mit einander zugewandten ebenen Fügeflächen ausgebildet ist. Dies erleichtert vorteilhaft eine Herstellung des den Kanal bildenden Gehäuses. Insbesondere kann der Kanal in einer der Gehäuseschalen in der zur Verfügung gestellten Fügefläche mikromechanisch hergestellt werden (beispielsweise durch Ätzen oder Mikrofräsen). Dies macht deutlich, dass der Begriff Gehäuseschale im weitesten Sinne zu verstehen ist, wobei als konstruktives Merkmal für die Gehäuseschale lediglich ausschlaggebend ist, dass diese eine ebene Fügefläche zur Verfügung stellt. Es ist beispielsweise bei großflächig angelegten Katalysatoroberflächen auch denkbar, dass der Katalysator als Probe die eine Gehäuseschale bildet, während die Analysevorrichtung vollständig in der anderen Gehäuseschale untergebracht ist. Diese andere Gehäuseschale beinhaltet auch den in der Fügefläche ausgebildeten Kanal, so dass durch Aufsetzen der Fügefläche auf den Katalysator erst ein geschlossener Kanal zur Untersuchung der katalytischen Oberfläche entsteht.

Eine besonders vorteilhafte Ausgestaltung der erfindungsgemäßen Analysevorrichtung ergibt sich, wenn zusätzlich zur Reaktorzelle eine Referenz-Reaktorzelle vorgesehen ist, die eine mit der Reaktorzelle vergleichbare Strömungsgeometrie aufweist. Als Strömungsgeometrie im Sinne der Erfindung sind diejenigen konstruktiven Merkmale der Reaktorzelle zu verstehen, die den Verlauf der Strömung des Probenmediums beeinflussen. Als Beispiele hierfür sind der Verlauf des fluidischen Kreislaufes und der zur Verfügung stehende Strömungsquerschnitt zu nennen. Vergleichbar ist die Strömungsgeometrie von Reaktorzelle und Referenz-Reaktorzelle insbesondere auch dann, wenn der Verlauf beider Reaktorzellen spiegelbildlich angeordnet ist. Dies hat Vorteile insbesondere für eine zentralen Versorgung bzw. Entsorgung des Probenmediums.

Weiterhin betrifft die Erfindung ein Verfahren zur Untersuchung der katalytischen Aktivität von Oberflächen, bei dem eine mit der katalytisch aktiven Oberfläche ausgestattete Probe in eine Aufnahme einer Reaktionszelle eingesetzt wird und mit einer Messanordnung die in der Reaktionszelle ablaufenden Reaktion optisch untersucht werden. Ein derartiges Verfahren ist in dem eingangs bereits erwähnten Tätigkeitsbericht 2005 der Max-Planck-Gesellschaft beschrieben und wurde eingangs bereits auch erläutert.

Damit liegt eine weitere Aufgabe der Erfindung darin, ein Verfahren zur Untersuchung der katalytischen Aktivität von Oberflächen anzugeben, welches sich mit einem vergleichsweise geringen räumlichen und apparativen Aufwand betreiben lässt und daher auch für den portablen Einsatz geeignet ist.

Diese Aufgabe wird mit dem genannten Verfahren erfindungsgemäß dadurch gelöst, dass die Reaktionszelle aus einem geschlossenen Kanal besteht, der einen Teil des fluidischen Kreislaufes bildet, wobei ein die Edukte der katalytisch zu unterstützenden Reaktion enthaltendes Fluid in dem Kreislauf umgewälzt wird. Dabei wird in der Messanordnung mit einer Lichtquelle ein Messstrahl erzeugt, der Messstrahl in den Kanal einspeist und an der Wand des Kanals mindestens einmal reflektiert; dann tritt der Messstrahl aus dem Kanal aus und trifft auf einen Lichtsensor.

Die erläuterte Leitung des Messstrahls ist vorteilhaft mit vergleichsweise einfachen konstruktiven Mitteln möglich. Es ist lediglich eine Lichtquelle sowie ein Lichtsensor notwendig, wobei diese in einer geeigneten Weise im Bereich des Kanals angeordnet werden müssen. Bei der Leitung des Messstrahls ist weiterhin zu berücksichtigen, dass die jeweiligen Brechungsindizes an den Übergängen der optischen Medien (Umgebung, Material der Kanalwand und Probenmedium im Inneren des Kanals) eine jeweilige Durchleitung bzw. Reflexion des Messstrahls gewährleisten. Durch den einfachen Aufbau der Analysevorrichtung ist diese in hinreichend kleiner Baugröße ausführbar, damit diese auch bei einem portablen Einsatz Verwendung finden kann. Hierdurch wird es möglich, beispielsweise im Einsatz befindliche, katalytisch wirksame Oberflächen zu untersuchen, um ein betriebsbedingtes Nachlassen der katalytischen Wirkung dieser Oberflächen zu ermitteln.

Gemäß einer Ausgestaltung des erfindungsgemäßen Verfahrens ist vorgesehen, dass ein durch den Lichtsensor erzeugter Messwert hinsichtlich seiner Intensität ausgewertet wird. Für diese Art der Auswertung bildet der bereits erläuterte Zusammenhang die Grundlage, dass sich das Absorptionsverhalten des Probenmediums bei fortschreitender, katalytisch unterstützter Reaktion ändert, so dass hierdurch auch die Intensität des durch den Lichtsensor aufgenommenen Messsignals variiert wird. Die Lichtintensität des Messsignals lässt also einen Aufschluss auf die in dem Kanal stattfindenden Reaktionen zu. Voraussetzung hierfür ist, dass die Abhängigkeit der Änderung des Absorptionsverhaltens von dem quantitativen, katalytisch hervorgerufenen Stoffumsatz bekannt ist. Dieser kann beispielsweise bei einem Serieneinsatz von Katalysatoren aus Erfahrungswerten ermittelt werden. Unter dieser Voraussetzung kann vorteilhaft vorgesehen werden, dass das Signal mit einem Referenzwert verglichen wird, der einen bestimmten Zustand der Analysevorrichtung, insbesondere den Zustand einer Bestückung des Kanals mit einer neuwertigen Probe unter bestimmten Reaktionsbedingungen repräsentiert. Der Referenzwert wird aus dem bereits erwähnten Erfahrungswert generiert und lässt nach erfolgter Messung dann eine Aussage über den Zustand der katalytischen Oberfläche zu. Hierbei kann ein weiterer Erfahrungswert als Grenzwert gebildet werden, der die Notwendigkeit eines Austauschs der katalytischen Oberfläche anzeigt.

Eine andere Möglichkeit besteht darin, dass das Signal mit einem Referenzwert verglichen wird, der zeitgleich mit dem Messwert in einer Referenz-Reaktionszelle ermittelt wird, wobei die Referenz-Reaktionszelle sich hinsichtlich eines bestimmten Reaktionsparameters von der Reaktionszelle unterscheidet. Die zuletzt beschriebene Vorgehensweise unter Zuhilfenahme einer Referenz-Reaktionszelle eignet sich insbesondere dann, wenn Erfahrungswerte für den verwendeten Katalysatortyp noch fehlen. Über die Referenz-Reaktionszelle lässt sich nämlich ein Vergleichswert generieren, so dass zumindest qualitative Aussagen über die Vorgänge in der Reaktionszelle mit dem zu untersuchenden Katalysator möglich werden.

Je nach der angestrebten zu ermittelnden Aussage können verschiedene Reaktionsparameter der Referenz-Reaktionszelle verändert werden. Beispielsweise können Probenmedien mit unterschiedlichen Konzentrationen der Edukte verwendet werden.

Eine besonders günstige Anwendung der Referenz-Reaktionszelle ergibt sich aber, wenn sich diese von der Reaktionszelle dadurch unterscheidet, dass in erstere eine Referenzprobe ohne oder mit sich von der anderen Probe unterscheidenden katalytischen Eigenschaften für die zu untersuchende Reaktion eingesetzt wird. Für den Fall, dass die Probe keine katalytischen Eigenschaften aufweist, lässt sich ein Referenzwert für die Absorption im Probenmedium erzeugen, der völlig unabhängig von einem katalytischen Einfluss ist. Hierdurch lassen sich eventuelle Veränderungen im Absorptionsverhalten ermitteln, die beispielsweise aufgrund sich verändernder Reaktionsbedingungen (Temperatur, Druck) erzeugt werden, wobei diese aus dem gewünschten Messergebnis eliminiert werden können. Eine andere Möglichkeit besteht darin, auf der Referenz-Probe eine neuwertige katalytische Oberfläche aufzubringen. Wird als Probe dann eine vergleichbare katalytische Oberfläche verwendet, die bereits über einen längeren Zeitraum verwendet wurde, so lassen sich im Verhältnis zur neuwertigen Referenz-Probe Änderungen des Absorptionsverhaltens über die Reaktionszeit ermitteln, die Aufschluss über einen eventuellen Verlust der katalytischen Wirkung der Probe zulassen.

Weitere Einzelheiten der Erfindung werden nachfolgend anhand der Zeichnung beschrieben. Gleiche oder sich entsprechende Zeichnungselemente sind in den Figuren mit jeweils den gleichen Bezugszeichen versehen, wobei diese nur insoweit mehrfach erläutert werden, wie sich Unterschiede zwischen den einzelnen Figuren ergeben. Es zeigen
- Figur 1: ein Ausführungsbeispiel der erfindungsgemäßen Ana- lysevorrichtung als Blockschaltbild,
- Figur 2: ein Ausführungsbeispiel des Kanals der erfindungs- gemäßen Analysevorrichtung im Längsschnitt, wobei sich der Figur 2 auch ein Ausführungsbeispiel des erfindungsgemäßen Verfahrens entnehmen lässt, und
- Figur 3: ein anderes Ausführungsbeispiel des Kanals der er- findungsgemäßen Analysevorrichtung im Querschnitt.

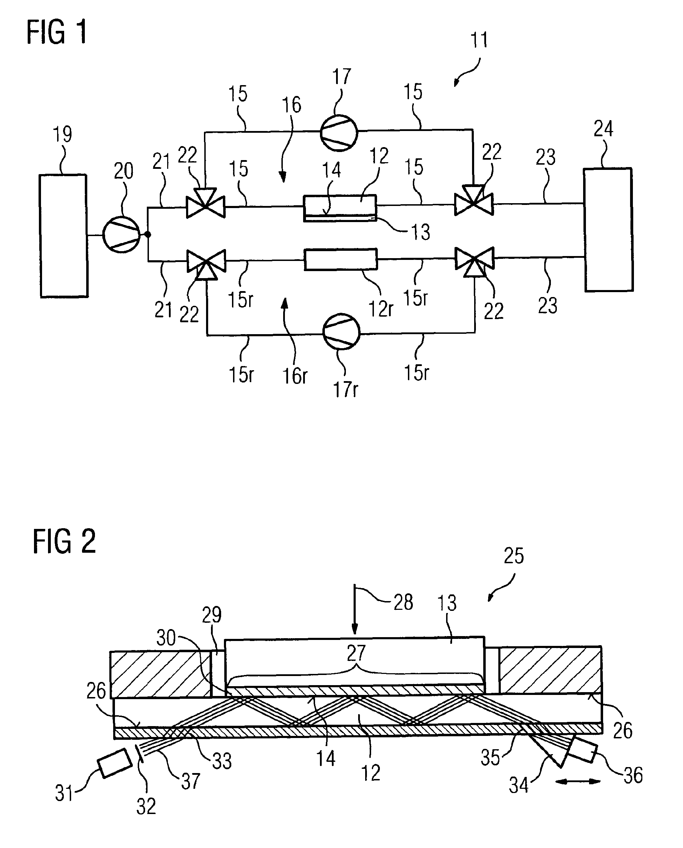

Eine Analysevorrichtung 11 weist einen im Folgenden noch näher erläuterten, und in Figur 1 nur angedeuteten Kanal 12 auf, in dem eine Probe 13 mit einer katalytisch wirksamen Oberfläche 14 untergebracht ist. Der Kanal 12 bildet mit weiteren Leitungen 15 einen fluidischen Kreislauf 16, in dem mittels einer Umwälzpumpe 17 ein bevorzugt flüssiges Probenmedium umgewälzt werden kann. Das Probenmedium enthält Edukte für eine Reaktion, die durch die katalytisch wirksame Oberfläche 14 unterstützt oder eingeleitet werden soll.

Spiegelsymmetrisch zum Kreislauf 16 ist ein Referenz-Kreislauf 16r mit einer Umwälzpumpe 17r, Leitungen 15r und einem Referenz-Kanal 12r aufgebaut, wobei in dem Referenzkanal 12r keine Probe vorgesehen ist.

Um die Analysevorrichtung 11 in Betrieb zu nehmen, wird aus einem Vorratsbehälter 19 das Probemedium entnommen und mittels einer Speisepumpe 20 über Speiseleitungen 21 in den Kreislauf 16 und den Referenz-Kreislauf 16r eingeleitet. Hierzu dienen Drei-Wege-Ventile 22, die nach erfolgter Befüllung des Kreislaufes 16 und des Referenz-Kreislaufes 16r so geschaltet werden, dass die genannten Kreisläufe jeweils in sich geschlossene Systeme bilden. Nach erfolgter Analyse, die im Folgenden noch näher erläutert wird, werden die Drei-Wege-Ventile wieder so geschaltet, dass nun über Abflussleitungen 23 das Probemedium in einen Abfallbehälter 24 geleitet werden kann.

Der Verlauf der Analyse lässt sich anhand von Figur 2 erläutern. Dargestellt ist derjenige Teil des Kreislaufes 16, der eine Reaktionszelle 25 bildet. Diese Reaktionszelle besteht aus dem Kanal 12, in dessen Wand 26 eine Einbauöffnung 27 für die Probe 13 vorgesehen ist. Die Probe 13 kann in Richtung des angedeuteten Pfeils 28 in die Einbauöffnung 27 eingesetzt werden, wobei die Einbauöffnung als Aufnahme für die Probe 13 dient und eine Dichtung 29 für einen Abschluss der Reaktionszelle nach außen sorgt. Die Probe 13 wird so in die Reaktionsöffnung eingesetzt, dass die katalytisch wirksame Oberfläche 14 eine Beschichtung 30 auf der Probe 13 einen Teil der Wand 26 bildet.

Weiterhin ist an der Reaktionszelle 25 eine Messanordnung befestigt, die aus einer Lichtquelle 31, z. B. einer Laserdiode, einer im Abstrahlbereich der Lichtquelle liegenden Einkoppellinse 32 an einer Einkoppelstelle 33, einem Prisma 34 an einer Auskoppelstelle 35 und einem Lichtsensor 36, z. B. einem Fotodetektor besteht. Die Messanordnung folgt folgendem Funktionsprinzip.

Durch die Lichtquelle wird ein Messstrahl 37 erzeugt, der mittels der Einkoppellinse 32 parallelisiert wird. An der Einkoppelstelle 33 durchtritt der Messstrahl 37 die Wand 26 des Kanals 12 und wird in dessen Längenverlauf fünfmal von der Wand 26 reflektiert. Danach trifft er auf die Auskoppelstelle 35 auf und durchtritt die Wand 26, um in das Prisma 34 einzutreten. Dieses leitet den Messstrahl 37 in den Lichtsensor 36, mit dessen Hilfe die Lichtintensität des Messstrahls 37 gemessen werden kann.

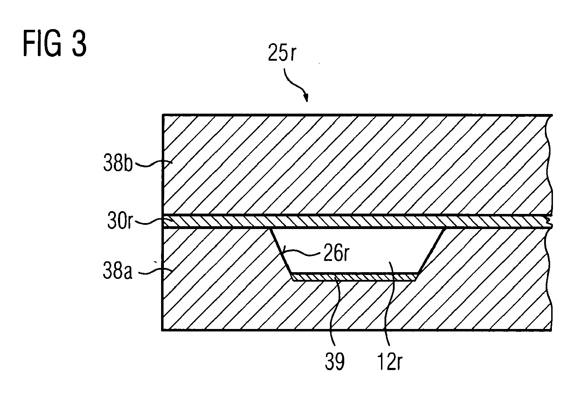

In Figur 3 ist eine andere Ausgestaltung der Reaktorzelle dargestellt, wobei hier derjenige Bereich gezeigt ist, der den Referenzkanal 12r bildet. Dieser wird durch zwei Gehäuseschalen 38a, 38b gebildet, wobei in der Gehäuseschale 38a der Querschnitt des Referenz-Kanals 12r beispielsweise durch anisotropes Ätzen hergestellt ist. Der Grund des Kanals ist weiterhin mit einer Reflexionsbeschichtung 39 versehen, welche im Bereich von in Figur 3 nicht dargestellten Einspeisungs- und Ausspeisungsstellen endet. Die Gehäuseschale 38b wird in dem Ausführungsbeispiel gemäß Figur 3 vollständig durch eine Referenzprobe gebildet, welche eine Referenz-Beschichtung 30r mit katalytisch wirksamer Oberfläche aufweist. Diese unterscheidet sich damit von der (nicht dargestellten) Beschichtung 30 darin, dass sie neuwertig ist und daher noch keine Abnutzungserscheinungen zeigt.

## Patentansprüche

1. Analysevorrichtung zur Untersuchung der katalytischen Aktivität von Oberflächen, aufweisend
- eine Reaktorzelle (25) mit einer Aufnahme (27) für eine mit der katalytisch aktiven Oberfläche (14) ausgestatteten Probe (13) und
- eine Messanordnung zur optischen Untersuchung der in der Reaktorzelle (25) ablaufenden Reaktionen
**dadurch gekennzeichnet,**
**dass**
- die Reaktorzelle aus einem geschlossenen Kanal (12) besteht, der einen Teil eines fluidischen Kreislaufes (16) bildet, und
- die Messanordnung eine Lichtquelle (31) zur Erzeugung eines Messstrahls (37) und einen Lichtsensor (36) für diesen Messstrahl aufweist, wobei die Messanordnung ein Einspeisen des Messstrahls (37) in den und Austreten des Messstrahls (37) aus dem Kanal (12) derart erlaubt, dass der Messstrahl (37) an der Wand (26) des Kanals mindestens einmal reflektiert wird.

2. Analysevorrichtung nach Anspruch 1,
**dadurch gekennzeichnet,**
**dass** die Aufnahme (27) derart in der Wand (26) des Kanals untergebracht ist, dass eine in die Aufnahme (27) eingesetzte Probe einen Teil der Wand (26) des Kanals bildet.

3. Analysevorrichtung nach einem der voranstehenden Ansprüche,
**dadurch gekennzeichnet,**
**dass** der Kanal (12) durch zwei Gehäuseschalen (38a,38b) mit einander zugewandten ebenen Fügeflächen ausgebildet ist.

4. Analysevorrichtung nach einem der voranstehenden Ansprüche,
**dadurch gekennzeichnet,**
**dass** zusätzlich zur Reaktorzelle (25) eine Referenz-Reaktorzelle (25r) vorgesehen ist, die eine mit der Reaktorzelle (25) vergleichbare Strömungsgeometrie aufweist.

5. Verfahren zur Untersuchung der katalytischen Aktivität von Oberflächen mit einer Analysevorrichtung (11), bei dem
- eine mit der katalytisch aktiven Oberfläche (14) ausgestatteten Probe (13) in eine Aufnahme (27) einer Reaktorzelle (25) eingesetzt wird und
- mit einer Messanordnung die in der Reaktorzelle (25) ablaufenden Reaktionen optisch untersucht werden,
**dadurch gekennzeichnet,**
**dass**
- die Reaktorzelle aus einem geschlossenen Kanal (12) besteht, der einen Teil eines fluidischen Kreislaufes (16) bildet, wobei ein die Edukte der katalytisch zu unterstützenden Reaktion enthaltendes Fluid in dem Kreislauf (16) umgewälzt wird, und
- in der Messanordnung mit einer Lichtquelle (31) ein Messstrahl (37) erzeugt wird, der Messstrahl (37) in den Kanal (12) eingespeist wird, der Messstrahl (37) an der Wand (26) des Kanals mindestens einmal reflektiert wird, der Messstrahl (37) aus dem Kanal (12) austritt und der Messstrahl (37) auf einen Lichtsensor (36) trifft.

6. Verfahren nach Anspruch 5,
**dadurch gekennzeichnet,**
**dass** ein durch den Lichtsensor (36) erzeugter Messwert hinsichtlich seiner Intensität ausgewertet wird.

7. Verfahren nach Anspruch 6,
**dadurch gekennzeichnet,**
**dass** das Signal mit einem Referenzwert verglichen wird, der einen bestimmten Zustand der Analysevorrichtung (11), insbesondere den Zustand einer Bestückung des Kanals (12) mit einer neuwertigen Probe unter bestimmten Reaktionsbedingungen repräsentiert.

8. Verfahren nach Anspruch 6,
**dadurch gekennzeichnet,**
**dass** das Signal mit einem Referenzwert verglichen wird, der zeitgleich mit dem Messwert in einer Referenz-Reaktionszelle (25r) ermittelt wird, wobei die Referenz-Reaktionszelle (25r) sich hinsichtlich eines bestimmten Reaktionsparameters von der Reaktionszelle (25) unterscheidet.

9. Verfahren nach Anspruch 8,
**dadurch gekennzeichnet,**
**dass** sich die Referenz-Reaktionszelle (25r) von der Reaktionszelle (25) **dadurch** unterscheidet, dass in erstere eine Referenz-Probe ohne oder mit sich von der anderen Probe unterscheidenden katalytischen Eigenschaften für die zu untersuchende Reaktion eingesetzt wird.

## Claims

1. Analysis device for studying the catalytic activity of surfaces, comprising
- a reactor cell (25) having a compartment (27) for a sample (13) provided with the catalytically active surface (14) and
- a measuring arrangement for optically studying the reactions taking place in the reactor cell (25), **characterized in that**
- the reactor cell consists of a closed channel (12) which forms part of a fluidic circuit (16), and
- the measurement arrangement comprises a light source (31) for generating a measurement beam (37) and a light sensor (36) for this measurement beam, the measuring arrangement allowing the measurement beam (37) to be introduced into the channel (12) and allowing the measurement beam (37) to emerge from the channel (12) in such a way that the measurement beam (37) is reflected at least once by the wall (26) of the channel.

2. Analysis device according to Claim 1, **characterized in that** the compartment (27) is fitted in the wall (26) of the channel so that a sample inserted into the compartment (27) forms a part of the wall (26) of the channel.

3. Analysis device according to one of the preceding claims, **characterized in that** the channel (12) is formed by two housing halves (38a, 38b) having mutually opposing plane connection surfaces.

4. Analysis device according to one of the preceding claims, **characterized in that** in addition to the reactor cell (25), a reference reactor cell (25r) is provided which comprises a similar flow geometry to the reactor cell (25).

5. Method for studying the catalytic activity of surfaces by using an analysis device (11), in which
- a sample (13) provided with the catalytically active surface (14) is fitted into a compartment (27) of a reactor cell (25) and
- the reactions taking place in the reactor cell (25) are optically studied by a measuring arrangement,
**characterized in that**
- the reactor cell consists of a closed channel (12) which forms part of a fluidic circuit (16), a fluid containing the educts of the reaction to be catalytically studied being circulated in the circuit (16), and
- a measurement beam (37) is generated by a light source (31) in the measuring arrangement, the measurement beam (37) is introduced into the channel (12), the measurement beam (37) is reflected at least once by the wall (26) of the channel, the measurement beam (37) emerges from the channel (12) and the measurement beam (37) strikes a light sensor (36).

6. Method according to Claim 5, **characterized in that** a measurement value generated by the light sensor (36) is evaluated in respect of its intensity.

7. Method according to Claim 6, **characterized in that** the signal is compared with a reference value which represents a particular status of the analysis device (11), in particular the status of the channel (12) when it is provided with a fresh sample under particular reaction conditions.

8. Method according to Claim 6, **characterized in that** the signal is compared with a reference value which is determined synchronously with the measurement value in a reference reaction cell (25r), the reference reaction cell (25r) differing from the reaction cell (25) in respect of a particular reaction parameter.

9. Method according to Claim 8, **characterized in that** the reference reaction cell (25r) differs from the reaction cell (25) **in that** a reference sample without catalytic properties or with catalytic properties differing from the other sample for the reaction to be studied is used in it.

## Revendications

1. Dispositif d'analyse pour l'étude de l'activité catalytique de surfaces, comportant
- une cellule ( 25 ) de réacteur ayant un logement ( 27 ) pour un échantillon ( 13 ) doté de la surface ( 14 ) active catalytiquement,
- un agencement de mesure pour l'étude optique des réactions se déroulant dans la cellule ( 25 ) de réacteur,
**caractérisé en ce que**
- la cellule de réacteur est constituée d'un canal ( 12 ) fermé qui forme une partie d'un circuit ( 16 ) fluidique, et
- l'agencement de mesure comporte une source ( 31 ) lumineuse pour la production d'un faisceau ( 37 ) de mesure et un capteur ( 36 ) de lumière pour ce faisceau de mesure, l'agencement de mesure permettant une injection du faisceau ( 37 ) de mesure dans le canal ( 12 ) et une sortie du faisceau ( 37 ) de mesure du canal ( 12 ) de manière à ce que le faisceau ( 37 ) de mesure soit réfléchi au moins une fois sur la paroi ( 26 ) du canal.

2. Dispositif d'analyse suivant la revendication 1,
**caractérisé**
**en ce que** le logement ( 27 ) est placé dans la paroi ( 26 ) du canal de manière à ce qu'un échantillon inséré dans le logement ( 27 ) forme une partie de la paroi ( 26 ) du canal.

3. Dispositif d'analyse suivant l'une des revendications précédentes,
**caractérisé**
**en ce que** le canal ( 12 ) est formé par deux coquilles ( 38a, 38b ) de boîtier ayant des surfaces de jonction planes tournées l'une vers l'autre.

4. Dispositif d'analyse suivant l'une des revendications précédentes,
**caractérisé**
**en ce qu'**il est prévu, en plus de la cellule ( 25 ) de réacteur, une cellule ( 25r ) de réacteur de référence, qui a une géométrie d'écoulement comparable à celle de la cellule ( 25 ) de réacteur.

5. Procédé d'étude de l'activité catalytique de surfaces par un dispositif ( 11 ) d'analyse, dans lequel
- on introduit un échantillon ( 13 ) doté de la surface ( 14 ) active catalytiquement dans un logement ( 27 ) d'une cellule ( 25 ) de réacteur et
- on étudie optiquement par un agencement de mesure les réactions se déroulant dans la cellule ( 25 ) de réacteur, **caractérisé**
**en ce que**
- la cellule de réacteur est constituée d'un canal ( 12 ) fermée qui forme une partie d'un circuit ( 16 ) fluidique, un fluide contenant les éduits de la réaction à assister catalytiquement étant mis en recirculation dans le circuit ( 16 ), et
- on produit dans l'agencement de mesure, par une source ( 31 ) lumineuse, un faisceau ( 37 ) de mesure, on injecte le faisceau ( 37 ) de mesure dans le canal ( 12 ), on réfléchit au moins une fois le faisceau ( 37 ) de mesure sur la paroi ( 26 ) du canal, on fait sortir le faisceau ( 37 ) de mesure du canal ( 12 ) et on fait arriver le faisceau ( 37 ) de mesure sur un capteur ( 36 ) de lumière.

6. Procédé suivant la revendication 5,
**caractérisé**
**en ce que** l'on exploite l'intensité d'une valeur de mesure produite par le capteur ( 36 ) de lumière.

7. Procédé suivant la revendication 6,
**caractérisé**
**en ce que** l'on compare le signal à une valeur de référence qui représente un certain état du dispositif ( 11 ) d'analyse, notamment l'état dans lequel le canal ( 12 ) est équipé d'un échantillon neuf dans des conditions de réaction déterminées.

8. Procédé suivant la revendication 6,
**caractérisé**
**en ce que** l'on compare le signal à une valeur de référence qui est déterminée en même temps que la valeur de mesure dans une cellule ( 25r ) de réaction de référence, la cellule ( 25r ) de réaction de référence se distinguant de la cellule ( 25 ) de réaction du point de vue d'un paramètre de réaction déterminée.

9. Procédé suivant la revendication 8,
**caractérisé**
**en ce que** la cellule ( 25r ) de réaction de référence se distingue de la cellule ( 25 ) de réaction par le fait qu'il est mis dans la première un échantillon de référence sans propriété catalytique pour la réaction à étudier ou ayant des propriétés catalytiques pour la réaction à étudier qui se distinguent de celles de l'autre échantillon.
